# EUROPEAN PATENT SPECIFICATION

(11) **EP 4 097 163 B1**
(45) Date of publication and mention of the grant of the patent: **04.11.2026**
(21) Application number: 21701946.2
(22) Date of filing: 18.01.2021
(51) Int. Cl.: C08G 59/24, B29C 64/124, C08G 59/68, C08G 65/18

(54) **PHOTO RADIATION CURABLE EPOXY FOR ELECTRICAL COMPONENTS**
LICHTSTRAHLENHÄRTBARES EPOXID FÜR ELEKTRISCHE BAUELEMENTE
ÉPOXY PHOTODURCISSABLE POUR COMPOSANTS ÉLECTRIQUES

(30) Priority: 27.01.2020 US 202062966260 P
(43) Date of publication of application: 07.12.2022
(73) Proprietor: Hitachi Energy Ltd, 8050 Zürich (CH)
(72) Inventor: GHOUL, Cherif, Raleigh, North Carolina 27612 (US); PERIGO, Elio, Wendell, North Carolina 27591 (US); ARMSTRONG, Daniel Pierce, Apex, North Carolina 27502 (US); MURPHY, Kathryn F., Raleigh, North Carolina 27603 (US); TUHIN, Mohammad O., Houston, Texas 77025 (US)
(74) Representative: Epping - Hermann - Fischer
(86) International application number: PCT/EP2021/050936
(87) International publication number: WO 2021/151707

(56) References cited:
- EP-A1- 2 502 728
- EP-A1- 2 842 980
- EP-A1- 3 336 122
- WO-A1-2015/200173
- WO-A1-2016/200972
- US-A1- 2008 180 501

## Description

### BACKGROUND

The present inventions relate generally to epoxy formulations, and particularly, to an epoxy formulation with improved performance in electrical components.

Recently, it has become more common to make various components from epoxy formulations. For example, one method that is growing in use is 3D printing techniques that print an epoxy formulation in a programmed three-dimensional shape. In order to allow the component to be printed in a timely manner in an accurate shape, printed epoxy is often cured as it is printed by irradiating the epoxy formulation with ultraviolet radiation (UV). For example, a laser may be used as the epoxy formulation is printed to apply UV radiation to the epoxy formulation to rapidly cure it.

In order to implement UV curing of epoxy formulations, it is necessary for the epoxy formulation to include a photoinitiator which responds to photo radiation. In use, the photoinitiator causes curing of the epoxy when photo radiation is applied to the photoinitiator. One common type of photoinitiator that has been used in epoxy formulations for 3D printing applications are various forms of acrylates. An advantage of using acrylates in epoxy formulations for 3D printing of components is that acrylates cause quick curing of the epoxy upon the application of UV radiation. Components made from epoxy/acrylate formulations have also been found to be suitable for many applications.

However, it has been determined by the inventors that components made from epoxy/acrylate formulations can have inferior properties when used in electrical components that experience voltage differentials. Thus, the inventors believe it would be useful to provide improved epoxy formulations with improved properties for electrical components.
WO 2016/200972 A1 discloses liquid radiation curable compositions which are suitable for hybrid (i.e. cationic and free-radical) polymerization when processed via additive fabrication equipment utilizing sources of actinic radiation with peak spectral intensities in the UV/vis region. Also dislcosed are methods of creating three-dimensional parts via additive fabrication processes utilizing sources of actinic radiation with peak spectral intensities in the UV/vis region employing liquid radiation curable compositions suitable for hybrid polymerization, and the parts cured therefrom.
EP 2 842 980 A1 discloses liquid radiation curable resin compositions for additive manufacturing comprising: from about 5 to about 30 wt.% of an oxetane; a (meth)acrylate component; a cationic photoinitiator; a free-radical photoinitiator; and from about 50 to about 80 wt.% of an epoxy, which further comprises a cycloaliphatic epoxy component, and an epoxy component having an aromatic glycidyl ether group, wherein the majority of the epoxy is the cycloaliphatic epoxy component are described and claimed. Also described is a process for using the liquid radiation curable resins for additive manufacturing to create molds for dental aligners, and the three-dimensional molds made from the liquid radiation curable resins for additive manufacturing.
EP 2 502 728 A1 discloses a liquid radiation curable resin that is capable of forming three-dimensional articles via an additive fabrication process having high strength, high stiffness, and low density. Also disclosed are liquid radiation curable resins for use in additive fabrication processes that comprise surface treated glass bubbles. The disclosed three-dimensional articles are subjected to a metallization process and thereby produce three-dimensional articles that possess excellent strength, stiffness, toughness, and low density.
EP 3 336 122 A1 discloses a curable composition which has excellent curability, less causes silicone molds to swell, and allows the silicone molds to have better durability and a longer service life in repeated use. The curable composition according to the present invention is a curable composition for production of an optical component by molding using silicone molds. The curable composition contains curable compounds and a cationic initiator. The curable compounds include (A) a cycloaliphatic epoxy compound and (B) an oxetane compound. The oxetane compound (B) is present in a content of 10 to 45 weight percent of the totality of all the curable compounds contained in the curable composition.
US 2008/180501 A1 provides provides an actinic ray curable composition, which exhibits excellent storage stability, low viscosity, high sensitivity and can form cured film having high hardness and superior weather-proofing under various environments particularly even under a high humidity atmosphere, and actinic ray curable ink utilizing the same, an image forming method utilizing said actinic ray curable ink as ink-jet ink, an ink-jet recording apparatus and a new epoxy compound.
WO 2015/200173 A1 discloses a method of forming a three-dimensional object is carried out by (a) providing a carrier and an optically transparent member having a build surface; (b) filling said build region with a polymerizable liquid, said polymerizable liquid comprising a mixture of (i) a light polymerizable liquid first component, and (ii) a second soliditiable component and is different from said first component; (c) irradiating said build region with light through said optically transparent member to form a solid polymer scaffold from said first component and also advancing said carrier away from said build surface to form a three-dimensional intermediate having the same shape as, or a shape to be imparted to, said three-dimensional object and containing said second soliditiable component carried in said scaffold in unsolidified and/or uncured form; and (d) concurrently with or subsequent to said irradiating step, solidifying and/or curing, said second soliditiable component in the three-dimensional intermediate to form said three-dimensional object.

### SUMMARY

The present invention provides an electrical component according to claim 1. Preferred embodiments are set forth in the subclaims.

### DETAILED DESCRIPTION

The improved epoxy formulation for use in photo radiation curing applications comprised in the electrical component includes 1%-6% by weight of a photoinitiator, 3%-20% by weight of an accelerator and at least 50% by weight of an epoxy, wherein the epoxy formulation after UV curing forms an electrical component exposed to a voltage differential. More preferably, the portion of the photoinitiator is 1.7%-4% or 1.7%-3% by weight. The portion of the accelerator is more preferably 5%-15% or 5%-10% by weight. The portion of the epoxy formulation is more preferably at least 70% or 80% by weight. The epoxy formulation may also include up to 65% by volume of a filler, such as silica, mica, quartz, calcium carbonate, talc, alumina silicate, alumina, alumina trihydrate or calcium sulfate.

The epoxy formulation may be used in a 3D printing process to form an electrical component. Although a variety of electrical components are possible, some examples include a bushing, a dielectric coating, plug housing and an insulating conduit. It is understood that a bushing is an insulation device that provides electrical isolation to a high voltage line that passes through a grounded barrier, such as a wall or enclosure. A dielectric coating may be used for providing electrical isolation and reducing the creep distance of an electrical component. A plug housing is an insulation barrier for an electrical connector or plug. An insulating conduit may be used for containing electrical wiring and protecting against mechanical, chemical or any other external source of damage.

After curing of the epoxy formulation, an electrical component formed therefrom is exposed to a voltage differential.

The photoinitiator is preferably a cationic photoinitiator. There are currently few viable routes for anionic photopolymerization of epoxies and oxetanes. Although there are many types of cationic initiators, only two classes of cations are industrially relevant: diaryliodonium cations and triarylsulfonium cations. lodonium salts primarily absorb in the 220-290 nm wavelength range, and sulfonium salts primarily absorb in the 300-360 nm wavelength range. lodonium salts have two aryl groups and sulfonium salts have three aryl groups in order to be UV reactive. Due to the production process, another common salt for sulfonium salts contains five aryl groups and two sulfur atoms or four aryl groups and two sulfur atoms within the molecule. However, this is still considered to be "triarylsulfonium" because the reactive cation is bonded to three aryl functional groups. The aryl groups may be substituted with various functional groups for the purpose of improved solubilization in polymer resins. These functionalizations can be symmetric or asymmetric although symmetric is more common. Common functionalizations to the 4 and 4' aryl carbons are: tert-butyl, methyl, ethyl, propyl, isopropyl, octyl, diaryl sulfide (sulfonium only) and aryl sulfide (sulfonium only). Although there are a large number of substitutions which are possible as long as they are electron withdrawing, most of the substitutions in industrially relevant cationic photoinitiators are linear aliphatic groups. The anion of each salt should be a weak nucleophile and a strong acid, such as a Lewis super acid. Common examples include hexafluoroantimonate (SbF₆⁻); hexafluorophosphate (PF₆⁻); tetrafloroborate (BF₄⁻); tetrakis pentafluorophenylborate (B(C₆F₅)₄⁻); hexafluoroarsenate (AsF₆⁻); and tetrakis nonafluoro-tert-butyl aluminate (Al(C₄F₉)₄⁻). Any combination of these cation/anion pairs may be viable. In practice, the anions that are most useful are SbF₆⁻, B(C₆F₅)₄⁻and Al(C₄F₉)₄⁻. Compounds of the same general structure may also be substituted. The cationic photoinitiator preferably may be a diaryliodonium cation or a triarylsulfonium cation including triarylsulfonium hexafluoroantimonate, diaryliodonium hexafluoroantimonate, diaryliodonium tetrakis[pentafluorophenyl] borate or high molecular weight sulfonium tetrakis[pentafluorophenyl] borate. More preferably, the photoinitiator is triarylsulfonium hexafluoroantimonate.

Acrylated oligomers and resins are common for photocuring. Acrylated resins use radical photoinitiators rather than cationic initiators. In some cases cationic and radical initiators are used together in acrylated resins. The improved epoxy formulation may include an acrylic monomer, acrylated oligomer, acrylated resin or a combination thereof. However, the acrylate content should not exceed 5% by weight as an upper limit. This number includes the total weight fraction of any type of acrylate in the mixture whether that be part of an acrylated resin or an acrylic monomer. Acrylated resin content should not exceed 20% of total resin composition. The composition of an acrylated oligomer should not exceed 50% of the oligomer composition. Most preferably, the improved epoxy formulation has no acrylate portion.

The accelerator is preferably an alcohol, a diol or a polyol as a reactive diluent. More preferably, the accelerator is an oxetane. Oxetanes are common reactive diluents (i.e., having a lower viscosity than the resin and being incorporated into the final epoxy material). Oxetanes can also be used to speed up the curing process. Most preferably, the oxetane is 3-ethyl-3-oxetane methanol. Other oxetanes may also be used, which are preferably reactive diluents with both an oxetane and alcohol group. Examples include oxetane-3-methanol and 3-methyl-3-oxetane methanol. Difunctional oxetanes may be used for a high degree of curing, including bis[1-ethyl(3-oxetanyl)]methyl ether; 1,4-bis[(3-ethyl-3-oxetanylmethoxy)methyl]benzene; 3-ethyl-3-[(2-ethylhexyloxy)methyl]oxetane; dimethyloxetane; phenyloxetane; trimethylene oxide; methyl-3-oxetane; ethyl-3-oxetane; a long chain alkyl substituted oxetane (propyl, butyl, pentyl, hexyl, hepyl, octyl substituted); 3-hydroxyoxetane; 3,3-oxetanedimethanol; 2,6-dioxaspiro3.3heptane. Additional examples of oxetanes that may be used are provided in U.S. Patent No. 7,235,593.

The epoxy is preferably a cycloaliphatic epoxy. Cycloaliphatics are more resistant to UV degradation and are fast reacting when compared to aromatic epoxy resins. While there are several cycloaliphatic epoxies available, epoxies containing the functional group epoxycyclohexane are much faster curing and are preferred for 3D printing. Examples include 3,4-epoxycyclohexylmethyl-3',4'-epoxycyclohexane carboxylate; epoxycyclohexane (also referred to as cyclohexyl oxirane or oxirane cyclohexane) which is a reactive diluent; or combinations thereof. Glycidyl epoxy functional groups are not as fast curing and therefore are not as useful for high T_{g} 3D printing resins. Most aromatic epoxies are glycidyl epoxies as well and are not as useful for rapid curing with cationic UV initiated polymerization.

## Claims

1. An electrical component comprising a photo radiation curable epoxy formulation, comprising:
1%-6% by weight of a photoinitiator;
3%-20% by weight of an accelerator; and
at least 50% by weight of an epoxy
wherein the epoxy formulation after UV curing forms an electrical component exposed to a voltage differential.

2. The electrical component according to claim 1, wherein the photoinitiator comprises a cationic photoinitiator, preferably comprising a diaryliodonium cation or a triarylsulfonium cation, more preferably selected from the group consisting of a triarylsulfonium hexafluoroantimonate, diaryliodonium hexafluoroantimonate, diaryliodonium tetrakis[pentafluorophenyl] borate and high molecular weight sulfonium tetrakis[pentafluorophenyl] borate.

3. The electrical component according to claim 1, wherein the photoinitiator comprises triarylsulfonium hexafluoroantimonate.

4. The electrical component according to claim 1, wherein the accelerator comprises an alcohol, a diol or a polyol as a reactive diluent, preferably an oxetane, more preferably selected from the group consisting of 3-ethyl-3-oxetane methanol; oxetane-3-methanol; and 3-methyl-3-oxetane methanol, or wherein the accelerator comprises an oxetane selected from the group consisting of bis[1-ethyl(3-oxetanyl)]methyl ether; 1,4-bis[(3-ethyl-3-oxetanylmethoxy)methyl]benzene; 3-ethyl-3-[(2-ethylhexyloxy)methyl]oxetane; dimethyloxetane; phenyloxetane; trimethylene oxide; methyl-3-oxetane; ethyl-3-oxetane; a long chain alkyl substituted oxetane (propyl, butyl, pentyl, hexyl, hepyl, octyl substituted); 3-hydroxyoxetane; 3,3-oxetanedimethanol; and 2,6-dioxaspiro3.3heptane.

5. The electrical component according to claim 1, wherein the epoxy is a cycloaliphatic epoxy, preferably comprising 3,4-epoxycyclohexylmethyl-3',4'-epoxycyclohexane carboxylate; epoxycyclohexane; or a combination thereof.

6. The electrical component according to claim 1, further comprising less than 5% by weight of an acrylate monomer, acrylated oligomer, acrylated resin or a combination thereof, preferably having no portion of an acrylate.

7. The electrical component according to claim 1, further comprising up to 65% by volume of a filler comprising silica, mica, quartz, calcium carbonate, talc, alumina silicate, alumina, alumina trihydrate or calcium sulfate.

8. The electrical component according to claim 1, wherein the electrical component comprises a bushing, a dielectric coating, a plug housing or an insulating conduit.

9. The electrical component according to claim 1, wherein the electrical component is formed by 3D printing the epoxy formulation.

10. The electrical component according to claim 1, comprising 1.7%-4% by weight of the photoinitiator.

11. The electrical component according to claim 10, comprising 1.7%-3% by weight of the photoinitiator.

12. The electrical component according to claim 1, comprising 5%-15% by weight of the accelerator.

13. The electrical component according to claim 12, comprising 5%-10% by weight of the accelerator.

14. The electrical component according to claim 1, comprising at least 70% by weight of the epoxy.

15. The electrical component according to claim 14, comprising at least 80% by weight of the epoxy.

## Patentansprüche

1. Elektrische Komponente, umfassend eine lichtstrahlungshärtbare Epoxidformulierung, umfassend:
1 Gew.-% bis 6 Gew.-% eines Photoinitiators;
3 Gew.-% bis 20 Gew.-% eines Beschleunigers; und
mindestens 50 Gew.-% eines Epoxids,
wobei die Epoxidformulierung nach UV-Härten eine elektrische Komponente bildet, die einer Spannungsdifferenz ausgesetzt ist.

2. Elektrische Komponente nach Anspruch 1, wobei der Photoinitiator einen kationischen Photoinitiator umfasst, der vorzugsweise ein Diaryliodoniumkation oder ein Triarylsulfoniumkation umfasst, besonders bevorzugt ausgewählt aus der Gruppe bestehend aus einem Triarylsulfoniumhexafluorantimonat, Diaryliodoniumhexafluorantimonat, Diaryliodoniumtetrakis[pentafluorphenyl]borat und Sulfoniumtetrakis[pentafluorphenyl]borat mit hohem Molekulargewicht.

3. Elektrische Komponente nach Anspruch 1, wobei der Photoinitiator Triarylsulfoniumhexafluorantimonat umfasst.

4. Elektrische Komponente nach Anspruch 1, wobei der Beschleuniger einen Alkohol, ein Diol oder ein Polyol als reaktives Verdünnungsmittel umfasst, vorzugsweise ein Oxetan, besonders bevorzugt ausgewählt aus der Gruppe bestehend aus 3-Ethyl-3-oxetanmethanol; Oxetan-3-methanol und 3-Methyl-3-oxetanmethanol, oder wobei der Beschleuniger ein Oxetan ausgewählt aus der Gruppe bestehend aus Bis[1-ethyl(3-oxetanyl)]methylether; 1,4-Bis[(3-ethyl-3-oxetanylmethoxy)methyl]benzol; 3-Ethyl-3-[(2-ethylhexyloxy)methyl]oxetan; Dimethyloxetan; Phenyloxetan; Trimethylenoxid; Methyl-3-oxetan; Ethyl-3-oxetan; einem mit langkettigem Alkyl substituierten Oxetan (mit Propyl, Butyl, Pentyl, Hexyl, Hepyl, Octyl substituiert); 3-Hydroxyoxetan; 3,3-Oxetandimethanol und 2,6-Dioxaspiro[3.3]heptan umfasst.

5. Elektrische Komponente nach Anspruch 1, wobei das Epoxid ein cycloaliphatisches Epoxid ist, das vorzugsweise 3,4-Epoxycyclohexylmethyl-3',4'-epoxycyclohexancarboxylat; Epoxycyclohexan oder eine Kombination davon umfasst.

6. Elektrische Komponente nach Anspruch 1, ferner umfassend weniger als 5 Gew.-% eines Acrylatmonomers, acrylierten Oligomers, acrylierten Harzes oder einer Kombination davon, vorzugsweise ohne Anteil eines Acrylats.

7. Elektrische Komponente nach Anspruch 1, ferner umfassend bis zu 65 Vol.-% eines Füllstoffs, der Siliciumdioxid, Glimmer, Quarz, Calciumcarbonat, Talk, Aluminiumoxidsilikat, Aluminiumoxid, Aluminiumoxidtrihydrat oder Calciumsulfat umfasst.

8. Elektrische Komponente nach Anspruch 1, wobei die elektrische Komponente eine Durchführung, eine dielektrische Beschichtung, ein Steckergehäuse oder eine Isolierleitung umfasst.

9. Elektrische Komponente nach Anspruch 1, wobei die elektrische Komponente durch 3D-Drucken der Epoxidformulierung gebildet wird.

10. Elektrische Komponente nach Anspruch 1, umfassend 1,7 Gew.-% bis 4 Gew.-% des Photoinitiators.

11. Elektrische Komponente nach Anspruch 10, umfassend 1,7 Gew.-% bis 3 Gew.-% des Photoinitiators.

12. Elektrische Komponente nach Anspruch 1, umfassend 5 Gew.-% bis 15 Gew.-% des Beschleunigers.

13. Elektrische Komponente nach Anspruch 12, umfassend 5 Gew.-% bis 10 Gew.-% des Beschleunigers.

14. Elektrische Komponente nach Anspruch 1, umfassend mindestens 70 Gew.-% des Epoxids.

15. Elektrische Komponente nach Anspruch 14, umfassend mindestens 80 Gew.-% des Epoxids.

## Revendications

1. Composant électrique comprenant une formulation d'époxy photodurcissable, comprenant :
1 % à 6 % en poids d'un photoinitiateur ;
3 % à 20 % en poids d'un accélérateur ; et
au moins 50 % en poids d'un époxy
dans lequel la formulation d'époxy après durcissement par des UV forme un composant électrique exposé à un différentiel de tension.

2. Composant électrique selon la revendication 1, dans lequel le photoinitiateur comprend un photoinitiateur cationique, comprenant de préférence un cation diaryliodonium ou un cation triarylsulfonium, plus préférablement choisi dans le groupe constitué par un hexafluoroantimoniate de triarylsulfonium, un hexafluoroantimoniate de diaryliodonium, un tétrakis[pentafluorophényl]borate de diaryliodonium et un tétrakis[pentafluorophényl]borate de sulfonium de haut poids moléculaire.

3. Composant électrique selon la revendication 1, dans lequel le photoinitiateur comprend un hexafluoroantimoniate de triarylsulfonium.

4. Composant électrique selon la revendication 1, dans lequel l'accélérateur comprend un alcool, un diol ou un polyol en tant que diluant réactif, préférablement un oxétane, plus préférablement choisi dans le groupe constitué par 3-éthyl-3-oxétane méthanol ; oxétane-3-méthanol ; et 3-méthyl-3-oxétane méthanol, ou dans lequel l'accélérateur comprend un oxétane choisi dans le groupe constitué par bis[1-éthyl(3-oxétanyl)]méthyléther ; 1,4-bis[(3-éthyl-3-oxétanylméthoxy)méthyl]benzène ; 3-éthyl-3-[(2-éthylhexyloxy)méthyl]oxétane ; diméthyloxétane ; phényloxétane ; oxyde de triméthylène ; méthyl-3-oxétane ; éthyl-3-oxétane ; un oxétane substitué par alkyle à longue chaîne (substitué par propyle, butyle, pentyle, hexyle, hepyle, octyle) ; 3-hydroxyoxétane ; 3,3-oxétanediméthanol ; et 2,6-dioxaspiro[3.3]heptane.

5. Composant électrique selon la revendication 1, dans lequel l'époxy est un époxy cycloaliphatique, comprenant de préférence du carboxylate de 3,4-époxycyclohexylméthyl-3',4'-époxycyclohexane ; de l'époxycyclohexane ; ou une combinaison de ceux-ci.

6. Composant électrique selon la revendication 1, comprenant en outre moins de 5 % en poids d'un monomère acrylate, d'un oligomère acrylé, d'une résine acrylée ou d'une combinaison de ceux-ci, de préférence n'ayant pas de partie d'un acrylate.

7. Composant électrique selon la revendication 1, comprenant en outre jusqu'à 65 % en volume d'une charge comprenant de la silice, du mica, du quartz, du carbonate de calcium, du talc, du silicate d'alumine, de l'alumine, du trihydrate d'alumine ou du sulfate de calcium.

8. Composant électrique selon la revendication 1, dans lequel le composant électrique comprend une douille, un revêtement diélectrique, un boîtier de fiche ou un conduit isolant.

9. Composant électrique selon la revendication 1, dans lequel le composant électrique est formé par impression 3D de la formulation d'époxy.

10. Composant électrique selon la revendication 1, comprenant 1,7 % à 4 % en poids du photoinitiateur.

11. Composant électrique selon la revendication 10, comprenant 1,7 % à 3 % en poids du photoinitiateur.

12. Composant électrique selon la revendication 1, comprenant 5 % à 15 % en poids de l'accélérateur.

13. Composant électrique selon la revendication 12, comprenant 5 % à 10 % en poids de l'accélérateur.

14. Composant électrique selon la revendication 1, comprenant au moins 70 % en poids de l'époxy.

15. Composant électrique selon la revendication 14, comprenant au moins 80 % en poids de l'époxy.
